(19) **Europäisches Patentamt / European Patent Office / Office européen des brevets**

(11) **EP 1 208 153 B1**

(12) **EUROPEAN PATENT SPECIFICATION**

(45) Date of publication and mention of the grant of the patent:
**09.01.2008 Bulletin 2008/02**

(51) Int Cl.:
**C08L 13/00** (2006.01)   **C08K 5/15** (2006.01)
**C08C 19/36** (2006.01)   **B60C 1/00** (2006.01)

(21) Application number: **00956275.2**

(22) Date of filing: **25.07.2000**

(86) International application number:
**PCT/EP2000/007106**

(87) International publication number:
**WO 2001/014470 (01.03.2001 Gazette 2001/09)**

(54) **PROCESS FOR PRODUCING TYRES, TYRES THUS OBTAINED AND ELASTOMERIC COMPOSITIONS USED THEREIN**

HERSTELLUNGSVERFAHREN FÜR REIFEN, DIE DAMIT HERGESTELLTEN REIFEN UND DABEI VERWENDETEN ELASTOMERZUSAMMENSETZUNGEN

PROCEDE DE FABRICATION DE PNEUMATIQUES, PNEUMATIQUES OBTENUS SELON CE PROCEDE ET COMPOSITIONS ELASTOMERES UTILISEES

(84) Designated Contracting States:
**AT BE CH CY DE DK ES FI FR GB GR IE IT LI LU MC NL PT SE**

(30) Priority: **26.08.1999 EP 99116676**
**30.08.1999 US 151358 P**

(43) Date of publication of application:
**29.05.2002 Bulletin 2002/22**

(73) Proprietor: **Pirelli Tyre S.p.A.**
**20126 Milano (IT)**

(72) Inventors:
• **SERRA, Antonio**
**I-16138 Genova (IT)**
• **NAHMIAS NANNI, Marco**
**I-20121 Milano (IT)**

(74) Representative: **Giannesi, Pier Giovanni et al**
**Pirelli S.p.A.**
**Direzione Proprietà Industriale**
**Viale Sarca, 222**
**20126 Milano (IT)**

(56) References cited:
**EP-A- 0 055 632**     **DE-A- 2 140 949**
**FR-A- 2 187 808**     **GB-A- 1 361 547**
**GB-A- 2 025 428**     **GB-A- 2 197 654**

• **PATENT ABSTRACTS OF JAPAN vol. 1998, no. 06, 30 April 1998 (1998-04-30) & JP 10 036563 A (UCHIYAMA MFG CORP), 10 February 1998 (1998-02-10)**

**Description**

The present invention relates to a process for producing tyres for vehicle wheels, to the tyres thus obtained and to the crosslinkable elastomeric compositions used therein. More particularly, the present invention relates to a process for producing tyres for vehicle wheels, which can be carried out in substantial absence of conventional crosslinking agents, to the tyres thus obtained and to the crosslinkable compositions used therein.

Processes for vulcanizing diene elastomers with sulphur are widely used in the rubber industry for the production of a wide range of products, and in particular tyres for vehicle wheels. Implementation of these processes, although giving high-quality vulcanized products, shows a considerable complexity, mainly due to the fact that, to obtain optimum vulcanization within industrially acceptable times, it is necessary to use a complex vulcanizing system which includes, besides sulphur or sulphur-donating compounds, one or more activators (for example stearic acid, zinc oxide and the like) and one or more accelerators (for example thiazoles, dithiocarbamates, thiurams, guanidines, sulphenamides and the like). The presence of these products can, in some cases, entail considerable problems in terms of harmfulness/toxicity both during production and during use, in particular when the vulcanized products are intended for medical/health-care or food use. In addition, it is known that the use of sulphur or sulphur-donating compounds leads, during the vulcanization step which is generally carried out at temperatures above 150°C, to development of volatile sulphur-containing compounds.

Consequently, in recent years, research efforts have been directed along two different lines, the first being to improve the known vulcanization processes to make them more efficient and cleaner, the second aimed at developing alternative crosslinking techniques. Although appreciable progress has been made, it is not possible to state at the present time that alternative techniques to crosslinking with sulphur exist which would give similar results and would simultaneously afford an effective simplification in terms of production. For example, crosslinking processes via peroxide compounds require special precautions on account of the instability of these compounds, in addition to requiring the use of activators. Crosslinking by means of radiation involves use of complex equipment, as well as incorporation of all the precautions required when high-energy and high-power radiation is used.

So-called "self-crosslinking" elastomeric compositions, i.e. compositions which do not require the use of crosslinking agents such as sulphur or sulphur compounds, are known in the art.

For example, US patent 2,724,707 describes elastomeric compositions consisting of a diene polymer containing carboxylic groups, in particular a carboxylated nitrile rubber (XNBR) obtained by partial hydrolysis of a butadiene/acrylonitrile polymer, wherein a polyhydric metal oxide (for example zinc oxide) is dispersed. On heating these compositions, they crosslink according to a mechanism of ionic type.

A study on crosslinking of XNBR having a high carboxylation degree by reaction with an epoxy resin (for example bisphenol A diglycidyl ether) in the presence of reinforcing fillers such as carbon black, silica and clay, is reported in the article by S.K. Chakraborty and S.K. De, published in the Journal of Applied Polymer Science, Vol. 27, pp. 4561-4576 (1982). The crosslinking is carried out by heating the rubber compound to 150°-180°C. As known, epoxy resins are low molecular weight products wherein the epoxide (or oxirane) groups are "external" , i.e. they are located in a terminal position on the main hydrocarbon chain, the oxygen atom forming the oxirane ring being linked to the last and the penultimate carbon atom of this chain.

A study of the crosslinking of a composition based on epoxidized natural rubber (ENR) and XNBR is reported in the article by R. Alex, P.P. De, N.M. Mathew and S.K. De, published in Plastics and Rubber Processing and Applications, Vol. 14, No. 4, 1990. In particular, this article describes the crosslinking of compositions consisting of ENR and XNBR as such or containing silica or carbon black as reinforcing filler. According to what reported by the authors, in the mixtures of ENR and XNBR the crosslinking reaction implies the formation of ester bonds between the epoxide groups and carboxylic groups. The rheometric curves would show. absence of reversion, stability of the crosslinked structure and a high crosslinking degree.

Italian patent IT-1, 295, 551 describes self-crosslinking compositions containing an epoxidized elastomer and a crosslinking agent of formula R1-R-R2, wherein R is an arylene, alkylene or alkenylene group, while R1 and R2 are carboxylic, amine, sulphonic or chlorosulphonic groups. Dicarboxylic or polycarboxylic acids, or mixtures thereof, can be used as crosslinking agents. Self-crosslinking compositions containing an epoxidized elastomer and a second elastomer wherein the repeating units of the polymer chain contain at least one carboxylic group are also described. For example, self-crosslinking compositions are obtained by mixing an epoxidized elastomer (for example the products ENR 25 or ENR 50 which are available under the brand name Epoxiprene® from the Malaysian Rubber Producers Research Association) with a butadiene/ acrylic acid copolymer (for example a product sold by Polysar/Bayer under the brand name Krynac®). The crosslinking reaction takes place by heating between the epoxide groups and the carboxylic groups, with formation of ester bonds.

US patent 5,173,557 describes self-crosslinking compositions comprising an elastomeric polymer functionalized with isocyanate groups and a compound containing at least two active hydrogen atoms of Zerewitinoff type, or self-crosslinking compositions comprising an elastomeric polymer containing active hydrogen atoms of Zerewitinoff type and a compound containing at least two isocyanate groups. Alternatively, an elastomeric polymer containing either isocyanate groups or active hydrogens of Zerewitinoff type can be used, without using an additional crosslinking agent. The active hydrogen atoms can be present, for example, on hydroxide, amine, carboxylic or thiol groups. To avoid undesired pre-crosslinking of the elastomer, the isocyanate groups are blocked beforehand with suitable functional groups, which are removed by heating before the crosslinking reaction between the free isocyanate groups and the active hydrogens, optionally with the aid of a catalyst.

On the basis of the Applicant's experience, the self-crosslinking compositions proposed hitherto in the prior art do not provide a valid alternative to conventional compositions vulcanized with sulphur or derivatives thereof. The reason for this is that the performance qualities of the crosslinked products are generally unsatisfactory, in particular for applications such as tyre rubber compounds, wherein a substantial constancy of the elastic performance qualities over a wide range of working temperatures and at the same time high abrasion resistance without unacceptably increasing hardness is required. This is the case, for example, for the self-crosslinking compositions described above wherein a polymer containing carboxylic groups (for example XNBR) is crosslinked by heating in admixture with an epoxidized elastomeric polymer or with an epoxy resin.

The Applicant has now found that crosslinked products, and in particular tyres for vehicle wheels, which have the desired combination of properties can be produced in the substantial absence of additional crosslinking agents, by using self-crosslinking compositions comprising a mixture of an elastomeric polymer containing carboxylic groups and a liquid organic compound containing epoxide groups located internally on the molecule.

After heating, these compositions achieve a high degree of crosslinking without addition of conventional crosslinking agents, with crosslinking times contained within limits which are acceptable for industrial use. The resulting crosslinked product combines excellent mechanical and elastic performance qualities (in particular stress at break, elongation at break, modulus and hardness) with low values of abradability, so as to make the self-crosslinking compositions above particularly suitable as elastomeric materials to be used for the production of tyres, in particular tread bands.

In addition, the use of liquid compounds containing internal epoxide groups makes it possible to obtain crosslinkable compositions which have excellent processability and a high capacity to include reinforcing fillers, even in the absence of compatibilizing additives, since these epoxidized products act not only as crosslinking agents but also as processing coadjuvants and are capable of interacting with reinforcing fillers containing active hydroxyl groups (for example silica), thus favouring compatibilization with the polymer matrix.

According to a first aspect, the present invention thus relates to a process for producing tyres for vehicle wheels, the said process comprising the following steps:

manufacturing a green tyre comprising at least one crosslinkable elastomeric material;
subjecting the green tyre to moulding in a mould cavity defined in a vulcanization mould;
crosslinking the elastomeric material by heating the tyre to a predetermined temperature and for a predetermined time;

characterized in that the crosslinkable elastomeric material comprises : (a) an elastomeric polymer containing carboxylic groups having an average molecular weight of between 2,000 and 1,000,000; and (b) an epoxidized liquid organic compound containing at least two internal epoxide groups, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain ;

the said crosslinking step being carried out subtantially in the absence of additional crosslinking agents.

According to a further preferred aspect, the crosslinking step is carried out by heating the crosslinkable elastomeric material to a temperature of at least 120°C, preferably of at least 160°C, for a time of at least 3 minutes, preferably of at least 10 minutes.

In accordance with a particularly preferred aspect, the said crosslinkable elastomeric material also comprises a reinforcing filler.

In a second aspect, the present invention relates to a tyre for vehicle wheels comprising one or more components made of a crosslinked elastomeric material, characterized in that at least one of the said components comprises, as crosslinked elastomeric material, an elastomeric polymer according to the first aspect containing carboxylic groups crosslinked by reaction with an epoxidized liquid organic compound containing epoxide groups located internally on the molecule, wherein the said carboxylated elastomeric polymer is crosslinked substantially in the absence of additional crosslinking agents.

According to a further aspect, the present invention relates to a tyre for vehicles, comprising a belt structure extended coaxially around a carcass structure and a tread band extended coaxially around the belt structure and having an external rolling surface intended to come into contact with the ground, characterized in that the said tread band comprises an elastomeric polymer according to the first aspect containing carboxylic groups crosslinked by reaction with an epoxidized liquid organic compound containing epoxide groups located internally on the molecule, and wherein the said carboxylated elastomeric polymer is crosslinked substantially in the absence of additional crosslinking agents.

According to a further aspect, the present invention relates to a crosslinked elastomeric composition consisting essentially of:

(a) an elastomeric polymer containing carboxylic groups having an average molecular weight of between 2,000 and 1,000,000;
(b) an epoxidized liquid organic compound containing at least two internal epoxide groups, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain; and

(c) at least one additional ingredient selected from the group consisting of reinforcing fillers, antioxidants, protective agents, plasticizers, compatibilizing agents for the reinforcing fillers, adhesives, anti-ozone agents, modifying resins, fibres, a lubricant, and a condensation catalyst;

the said composition being crosslinked substantially in the absence of additional crosslinking agents.

Accordinq to a further aspect, the present invention relates to a crosslinked elastomeric product obtained by crosslinking a crosslinkable composition as defined above.

For the purposes of the present description and the claims, the expression "in substantial absence of any additional crosslinking agents" means that the crosslinkable composition is not subjected to the action of other systems capable of bringing about its crosslinking, or that other products which may be present in the composition can in themselves participate in the crosslinking reaction, but are used in amounts less than the minimum amount required to obtain an appreciable degree of crosslinking in short times (for example within 5 minutes). In particular, the compositions according to the present invention are crosslinkable in substantial absence of any of the crosslinking systems commonly used in the art, such as, for example, sulphur or sulphur donors, peroxides or other radical initiators, and neither are these compositions subjected to the action of high-energy radiation (UV, gamma rays, etc.) so as to induce crosslinking phenomena in the polymer.

The liquid organic compounds containing epoxide groups located internally on the molecule (for simplicity, these are referred to hereinbelow as "organic compounds containing internal epoxide groups" or "epoxidized organic compounds") are products of hydrocarbon type which are, at room temperature, in the form of viscous liquids or oils.

These compounds contain at least two internal epoxide groups, i.e. groups wherein one oxirane bridge connects:

(i) two adjacent carbon atoms located on the main chain, with the condition that neither of the said two adjacent carbon atoms is a terminal carbon atom of this chain; or
(ii) two adjacent carbon atoms located on a side chain.

The presence of internal epoxide groups does not, however, exclude the possibility of epoxide groups in a terminal position also being present in the molecule.

At least two internal epoxide groups are present in the liquid organic compounds according to the present invention. In general, the amount of epoxide groups is such that the epoxide equivalent weight of the epoxidized compound is usually between 40 and 2,000, preferably between 50 and 1, 500, more preferably between 100 and 1,000. With the term "epoxide equivalent weight" (EEW) it is meant the molecular weight of the epoxidized compound per mole of oxirane oxygen, namely:

$$EEW = \frac{1600}{\%O}$$

where %O is the content of oxirane oxygen, expressed as a percentage by weight of oxirane oxygen relative to the total weight of the compound. The content of oxirane oxygen in the epoxidized compounds can be determined according to known techniques, for example by titration with a solution of hydrobromic acid in acetic acid.

One class of liquid organic compounds containing internal epoxide groups which are particularly preferred is that of epoxidized oils, which can be obtained by epoxidation of unsaturated fatty acids or esters (in particular glycerides, diglycerides or triglycerides) of unsaturated fatty acids, of synthetic or natural origin, or alternatively by epoxidation of mixtures of the said unsaturated acids or esters with saturated acids or esters thereof. The saturated or unsaturated fatty acids generally contain from 10 to 26 carbon atoms, preferably from 14 to 22 carbon atoms. Examples of unsaturated fatty acids are: myristoleic acid, palmitoleic acid, oleic acid, gadoleic acid, erucic acid, ricinoleic acid, linoleic acid, linolenic acid, arachidonic acid and the like, or mixtures thereof. Examples of saturated fatty acids are: lauric acid, myristic acid, palmitic acid, stearic acid, behenic acid and the like, or mixtures thereof. Plant oils such as, for example: epoxidized linseed oil, epoxidized safflower oil, epoxidized soybean oil, epoxidized corn oil, epoxidized cottonseed oil, epoxidized rapeseed oil, epoxidized castor oil, epoxidized tung oil, epoxidized tall oil, octyl epoxytallate, epoxidized sunflower oil, epoxidized olive oil and the like, or mixtures thereof, are particularly preferred. The epoxidized oils generally have a freezing temperature of less than 23°C, preferably less than 10°C. Products of this type can be found on the market, for example, under the brand names Epoxol® (FACI, American Chemical Service Inc.) ; Paraplex®, Plasthall® and Monoplex® (C.P. Hall); Vikoflex® and Ecepox® (Elf Atochem).

Another class of liquid organic compounds containing internal epoxide groups which can be used advantageously according to the present invention consists of epoxidized diene oligomers, wherein the base polymer structure, of synthetic or natural origin, is derived from one or more conjugated diene monomers, optionally copolymerized with other monomers containing ethylenic unsaturation. These oligomers generally have an average molecular weight (number-average), which can be determined, for example, by gel permeation chromatography (GPC), of between 500 and 10,000, preferably between 1,000 and 8,000.

Oligomers derived from the (co) polymerization of conjugated diene monomers containing from 4 to 12, preferably from 4 to 8, carbon atoms, selected, for example, from: 1,3-butadiene, isoprene, chloroprene, 2,3-dimethyl-1,3-butadiene, 3-butyl-1,3-octadiene, 2-phenyl-1,3-butadiene and the like, or mixtures thereof, are particularly preferred. 1,3-Butadiene and isoprene are particularly preferred.

The diene monomers can optionally be copolymerized with other monomers containing ethylenic unsaturation, such as, for example: alpha-olefins containing from 2 to 12 carbon atoms (for example ethylene, propylene or 1-butene), monovinylarenes containing from 8 to 20 carbon atoms (for example styrene, 1-vinylnaphthalene or 3-methylstyrene), vinyl esters wherein the ester group contains from 2 to 8 carbon atoms (for example vinyl acetate, vinyl propionate or vinyl butanoate), alkyl acrylates and alkyl methacrylates wherein the alkyl contains from 1 to 8 carbon atoms (for example ethyl acrylate, methyl acrylate, methyl methacrylate, tert-butyl acrylate or n-butyl acrylate), acrylonitrile, and the like, or mixtures thereof.

Among the epoxidized diene oligomers, preferred are those obtained by epoxidation of oligomers of: 1,3-butadiene; isoprene; 1,3-butadiene and styrene; 1,3-butadiene and isoprene; isoprene and styrene; 1,3-butadiene and acrylonitrile; and the like. Epoxidized oligomers of 1,3-butadiene or of isoprene are particularly preferred.

Epoxidized diene oligomers which can be used in the present invention are commercially available, for example under the brand name Poly BD® from Elf Atochem.

The epoxidation reaction of a compound containing internal alkylene groups can be carried out according to known techniques. For example, the starting material can be subjected to direct oxidation using a suitable oxidizing agent such as a peracid (in particular perbenzoic acid, metachloroperbenzoic acid, peracetic acid, trifluoroperacetic acid, perpropionic acid, and the like) or an alkaline oxidizing agent (for example hydrogen peroxide mixed with aqueous sodium hydroxide solution), or alternatively by reaction with oxygen gas in the presence of a catalyst (for example Ag). Alternatively, it is possible to carry out a selective oxidation reaction of the internal alkylene groups by formation of a halohydrin by reaction with a halogen (for example $Cl_2$ or $Br_2$) in the presence of water, followed by alkaline treatment with formation of the epoxide groups. Further details regarding the epoxidation reactions are given, for example, in US patents 4,341,672, 4,851,556 and 5,366,846.

The elastomeric polymers containing carboxylic groups (also referred to for simplicity hereinbelow as "carboxylated elastomeric polymers") which can be used in accordance with the present invention are homopolymers or copolymers with elastomeric properties, which have a glass transition temperature (Tg) of less than 23°C, preferably less than 0°C, and which contain at least 0.1 mol%, preferably from 1 to 30 mol% and even more preferably from 2 to 10 mol%, of carboxylic groups relative to the total number of moles of monomers present in the polymer. Mixtures of various polymers containing carboxylic groups, or mixtures of one or more carboxylated polymers with one or more non-carboxylated elastomeric polymers, also fall within the present definition.

In the case of copolymers, these can have a random, blocked, grafted, or also mixed, structure. The average molecular weight of the base polymer is between 2,000 and 1,000,000, preferably between 50,000 and 500,000.

Carboxylated diene homopolymers or copolymers wherein the base polymer structure, of synthetic or natural origin, is derived from one or more conjugated diene monomers, optionally copolymerized with monovinylarenes and/or polar comonomers, are particularly preferred. Preferably, the base polymer structure is obtained by (co)polymerization of diene monomers containing from 4 to 12, preferably from 4 to 8, carbon .atoms, selected, for example, from: 1,3-butadiene, isoprene, 2,3-dimethyl-1,3-butadiene, 3-butyl-1,3-octadiene, 2-phenyl-1,3-butadiene and the like, or mixtures thereof. 1,3-Butadiene and isoprene are particularly preferred.

Monovinylarenes which can optionally be used as comonomers generally contain from 8 to 20, preferably from 8 to 12, carbon atoms and can be selected, for example, from: styrene; 1-vinylnaphthalene; 2-vinylnaphthalene; various alkyl, cycloalkyl, aryl, alkylaryl or arylalkyl derivatives of styrene, such as, for example: 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene and the like, or mixtures thereof. Styrene is particularly preferred. These monovinylarenes can optionally be substituted with one or more functional groups, such as alkoxy groups, for example 4-methoxystyrene, amino groups, for example 4-dimethylaminostyrene, and the like.

Various polar comonomers can be introduced into the base polymer structure, in particular vinylpyridine, vinylquinoline, acrylic and alkylacrylic acid esters, nitriles and the like, or mixtures thereof, such as, for example: methyl acrylate, ethyl acrylate, methyl methacrylate, ethyl methacrylate and acrylonitrile.

Among the base polymer structures which are particularly preferred are: natural rubber, polybutadiene, polyisoprene, styrene/butadiene copolymers, butadiene/isoprene copolymers, styrene/isoprene copolymers, butadiene/acrylonitrile copolymers and the like, or mixtures thereof.

In the case of base structures of copolymer type, the amount of diene comonomer relative to the other comonomers is such as to ensure that the final polymer has elastomeric properties. In this respect, it is not possible generally to establish the minimum amount of diene comonomer required to obtain the desired elastomeric properties. As an indication, an amount of diene comonomer of at least 50% by weight relative to the total weight of the comonomers can generally be considered sufficient.

The preparation of the base polymer can be carried out according to known techniques, generally by (co) polymerization of the corresponding monomers in emulsion, in suspension or in solution.

To introduce carboxylic groups, the base polymer thus obtained can be made to react with a carboxylating agent in the presence of a radical initiator, preferably an organic peroxide (for example dicumyl peroxide or benzoyl peroxide). Carboxylating agents commonly used are, for example: maleic anhydride, itaconic anhydride, thioglycolic acid, beta-mercaptopropionic acid and the like.

The introduction of carboxylic groups can also be carried out during the synthesis of the polymer by copolymerization between a conjugated diene, optionally mixed with monovinylarenes and/or polar comonomers, as reported above, and an olefinic monomer containing one or more carboxylic groups, or a derivative thereof. Carboxylated olefinic monomers usually used are, for example: acrylic acid, methacrylic acid, sorbic acid, beta-acryloxypropanoic acid, ethacrylic acid, 2-ethyl-3-propylacrylic acid, vinylacrylic acid, itaconic acid, cinnamic acid, maleic acid, fumaric acid and the like, or mixtures thereof. Within this class of carboxylated elastomeric polymers, the following are particularly preferred: 1,3-butadiene/(meth)acrylic acid copolymers, 1,3-butadiene/acrylonitrile/(meth)acrylic acid copolymers, 1,3-butadiene/ styrene/(meth)acrylic acid copolymers and the like, or mixtures thereof.

Alternatively, the corresponding carboxylic derivatives can be used, in particular anhydrides, esters, nitriles or amides. In this case, the polymer obtained is then subjected to hydrolysis so as to convert, partially or totally, the functional groups thus introduced into free carboxylic groups.

Carboxylated elastomeric polymers which may also be used are elastomeric copolymers of one or more monoolefins with an olefinic comonomer containing one or more carboxylic groups or derivatives thereof. The monoolefins can be selected from: ethylene and alpha-olefins generally containing from 3 to 12 carbon atoms, such as, for example: propylene, 1-butene, 1-pentene, 1-hexene, 1-octene and the like, or mixtures thereof. The following are preferred: copolymers between ethylene and an alpha-olefin, and optionally a diene; homopolymers of isobutene or copolymers thereof with small amounts of a diene, which are optionally at least partially halogenated. The optional diene contains, in general, from 4 to 20 carbon atoms, and is preferably selected from: 1,3-butadiene, isoprene, 1,4-hexadiene, 1,4-cyclohexadiene, 5-ethylidene-2-norbornene, 5-methylene-2-norbornene, and the like. Among these, the following are particularly preferred: ethylene/propylene copolymers (EPR) or ethylene/propylene/diene copolymers (EPDM) ; polyisobutene; butyl rubbers; halobutyl rubbers, in particular chlorobutyl or bromobutyl rubbers; and the like, or mixtures thereof. Carboxylated olefinic comonomers can be selected from those mentioned above for the diene polymers. When a diene comonomer is present, it can be used to introduce carboxylic groups by means of the carboxylation reaction as described above.

Further information regarding structure and production processes of carboxylated elastomers are given, for example, in the article by H.P. Brown in Rubber Chemistry and Technology, Vol. XXX, 5, page 1347 et seq (1957) or also in US patent 2,729,707.

Examples of carboxylated elastomeric polymers which can be used in the present invention and which are currently commercially available are the products Nipol® EP (Nippon Zeon) or the products of the series Krynac® X (Bayer).

In accordance with the present invention, the epoxidized liquid compound is mixed with the carboxylated elastomeric polymer in proportions which vary as a function of the amount of functional groups present and as a function of the elastic properties which it is desired to obtain for the final product. In general, the amount of epoxidized liquid compound can range between 5 and 200 parts by weight, preferably between 10 and 120 parts by weight, per 100 parts by weight of elastomeric polymer.

The crosslinkable compositions according to the present invention can contain reinforcing fillers, in an amount generally of between 20 and 120 phr, preferably between 40 and 90 phr (phr = parts by weight per 100 parts of polymer base). The reinforcing filler can be selected from those commonly used for crosslinked products, and in particular for tyres, such as: carbon black, silica, alumina, aluminosilicates, calcium carbonate, kaolin and the like, or mixtures thereof.

The crosslinkable compositions according to the present invention can comprise other commonly used additives selected on the basis of the specific application for which they are intended. For example, the following can be added to these compositions: antioxidants, protective agents, plasticizers, compatibilizing agents for the reinforcing filler, adhesives, anti-ozone agents, modifying resins, fibres (for example Kevlar® pulp) and the like.

In particular, for the purpose of further improving processability, a lubricant can be added to the crosslinkable compositions according to the present invention, this lubricant being selected in general from mineral oils, vegetable oils, synthetic oils and the like, or mixtures thereof, for example: aromatic oil, naphthenic oil, phthalic oil, soybean oil and the like. The amount of lubricant can range in general from 2 to 100 phr, preferably from 5 to 50 phr.

For the purpose of increasing the crosslinking rate, an effective amount of a condensation catalyst can also be added to the crosslinkable compositions according to the present invention. This amount may vary within a wide range, and is generally between 0.01 and 5 parts by weight, preferably between 0.1 and 3 parts by weight, relative to 100 parts by weight of carboxylated elastomeric polymer. The catalyst can be selected from those known in the art for condensation reactions, and in particular:

- carboxylates of metals such as tin, zinc, zirconium, iron, lead, cobalt, barium, calcium, manganese and the like, for example: dibutyltin dilaurate, dibutyltin diacetate, dioctyltin dilaurate, stannous acetate, stannous caprylate, lead naphthenate, zinc caprylate, zinc naphthenate, cobalt naphthenate, ferrous octanoate, iron 2-ethylhexanoate, and the like;
- arylsulphonic acids or derivatives thereof, for example: p-dodecylbenzenesulphonic acid, tetra-propylbenzenesulphonic acid, acetyl p-dodecylbenzenesulphonate, 1-naphthalene sulphonic acid, 2-naphthalene sulphonic acid, acetylmethyl sulphonate, acetyl p-toluenesulphonate, and the like;
- strong inorganic acids or bases, such as sodium hydroxide, potassium hydroxide, hydrochloric acid, sulphuric acid and the like;
- amines and alkanolamines, for example ethylamine, dibutylamine, hexylamine, pyridine, dimethylethanolamine and the like;

or mixtures thereof.

The crosslinkable compositions according to the present invention can be prepared by mixing the polymer base and the reinforcing filler optionally present and the other additives according to techniques known in the art. The mixing can be carried out, for example, using an open-mill mixer, or an internal mixer of the type with tangential rotors (Banbury) or interlocking rotors (Intermix), or in continuous mixers of the Ko-Kneader (Buss) or co-rotating or counter-rotating twinscrew type.

During the mixing, the temperature is kept below a predetermined value so as to avoid premature crosslinking of the composition. To this end, the temperature is generally kept below 170°C, preferably below 150°C, even more preferably below 120°C. As regards the mixing temperature, this can vary within a wide range, depending mainly on the specific composition of the mixture, on the presence of any fillers and on the type of mixer used. In general, a mixing time of more than 90 sec, preferably between 3 and 35 min, is sufficient to obtain a homogeneous composition.

In order to optimize the dispersion of the filler while keeping the temperature below the values indicated above, multi-step mixing processes can also be employed, optionally using a combination of different mixers arranged in series.

As an alternative to the abovementioned solid-state mixing processes, in order to improve the dispersion of the components, the crosslinkable compositions according to the present invention can advantageously be prepared by mixing the epoxidized liquid compound, and optionally the reinforcing filler and the other additives, with the polymer base in the form of an aqueous emulsion or a solution in an organic solvent. The filler can be used as such or in the form of a suspension or dispersion in an aqueous medium. The polymer is subsequently separated from the solvent or from the water by suitable means. For example, when a polymer in emulsion is used, the polymer can be precipitated in the form of particles including the oily phase and any filler by adding a coagulant. A coagulant which can be used in particular is an electrolytic solution, for example an aqueous sodium or potassium silicate solution. The coagulation process can be promoted by using a volatile organic solvent which is then removed by evaporation during precipitation of the filled polymer. Further details regarding processes of this type for the preparation of elastomeric compositions are given, for example, in US patent 3, 896, 365.

The present invention will now be illustrated in further detail by means of a number of working examples, with reference to:

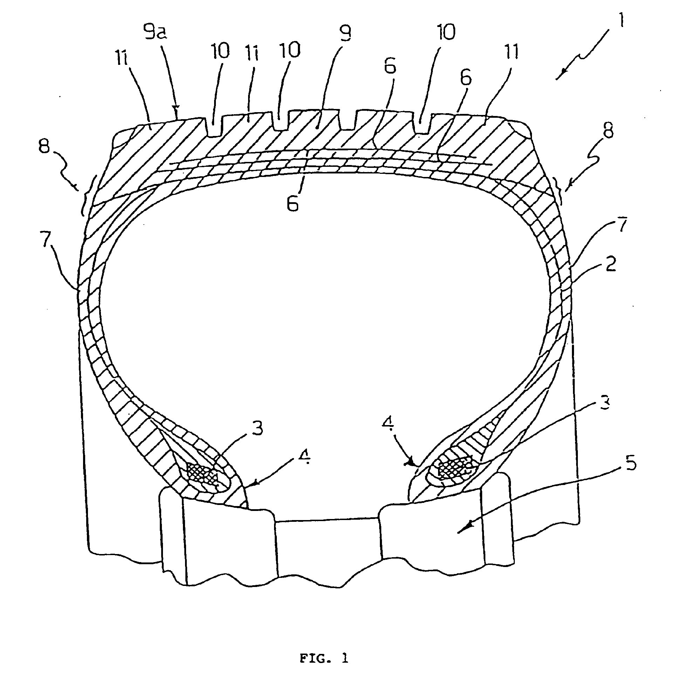

the attached Figure 1, which is a view in cross section with partial cutaway of a tyre according to the present invention.

With reference to Fig. 1, a tyre 1 conventionally comprises at least one carcass ply 2 whose opposite side edges are externally folded around respective anchoring bead wires 3, each enclosed in a bead 4 defined along an inner circumferential edge of the tyre, with which the tyre engages on a wheel rim 5 forming part of the wheel of a vehicle.

Along the circumferential development of the carcass ply 2 are applied one or more belt strips 6, made using metal or textile cords enclosed in a rubber sheet. Outside the carcass ply 2, in respective opposite side portions of this ply, there is also applied a pair of side walls 7, each of which extends from the bead 4 to a so-called "shoulder" region 8 of the tyre, defined by the opposing ends of the belt strips 6. On the belt strips 6 is circumferentially applied a tread band 9 whose side edges end at the shoulders 8, joining it to the side walls 7. The tread band 9 externally has a rolling surface 9a, designed to come into contact with the ground, in which circumferential grooves 10 can be provided, intercalated with transverse cuttings, not shown in the attached figure, which define a plurality of blocks 11 variously distributed on the said rolling surface 9a.

The process for producing the tyre according to the present invention can be carried out according to techniques and using apparatus known in the art (see, for example, patents EP-199,064, US-4,872,822 and US-4,768,937). More particularly, this process comprises a step of manufacturing the green tyre, in which a series of semi-finished articles, prepared beforehand and separately from each other and corresponding to the various parts of the tyre (carcass plies, belt strips, bead wires, fillers, side walls and tread bands) are combined together using a suitable manufacturing machine.

The green tyre thus obtained is then subjected to the subsequent steps of moulding and crosslinking. To this end, a vulcanization mould is used which is designed to receive the tyre being processed inside a moulding cavity having walls which are countermoulded to the outer surface of the tyre when the crosslinking is complete.

The green tyre can be moulded by introducing a pressurized fluid into the space defined by the inner surface of the tyre, so as to press the outer surface of the green tyre against the walls of the moulding cavity. In one of the moulding methods widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained (see, for example, patent EP-242,840). The difference in coefficient of thermal expansion between the toroidal metal support and the crude elastomeric material is exploited to achieve an adequate moulding pressure.

At this point, the step of crosslinking of the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is brought to the crosslinking temperature using the same pressurized fluid used to press the tyre against the walls of the moulding cavity, heated to a maximum temperature of between 100 and 250°C. The time required to obtain a satisfactory degree of crosslinking throughout the mass of the elastomeric material can vary in general between 3 min and 90 min and depends mainly on the dimensions of the tyre.

The present invention will now be illustrated in further detail by means of a number of preparation examples.

EXAMPLES 1-6

The compositions given in Table 1 were prepared using an open cylinder mixer, with a mixing time of about 30 min, taking care to keep the temperature as low as possible and, in any event, not above 120°C.

The compositions thus prepared were subjected to MDR rheometric analysis using an MDR rhometer from Monsanto, the tests being carried out at 200°C for 30 min, with an oscillation frequency of 1.66 Hz (100 oscillations per minute) and an oscillation amplitude of $\pm$ 0. 5° . The mechanical properties (according to ISO standard 37) and the hardness in IRHD degrees (according to ISO standard 48) were measured on samples of the said compositions crosslinked at 200°C for 15 min. The results are given in Table 1.

TABLE 1

| EXAMPLE | 1(*) | 2(*) | 3 | 4 | 5 | 6 |
|---|---|---|---|---|---|---|
| PERBUNAN NT® 2845 | 100 | -- | -- | -- | -- | -- |
| NIPOL EP® 1072 | -- | 100 | 100 | 100 | 100 | 100 |
| PARAPLEX® G-60 | 10 | -- | 10 | 20 | -- | -- |
| POLY BD® 600 | -- | -- | -- | -- | 10 | -- |
| POLY BD® 605 | -- | -- | -- | -- | -- | 10 |

(continued)

| EXAMPLE | 1(*) | 2(*) | 3 | 4 | 5 | 6 |
|---|---|---|---|---|---|---|
| ML (dN·m) | 0.45 | 0.36 | 0.25 | 0.18 | 0.31 | 0.42 |
| MH (dN·m) | 0.87 | 2.23 | 6.33 | 8.51 | 5.14 | 8.17 |
| $t_{90}$ (sec) | 27.38 | 24.34 | 11.88 | 13.24 | 23.37 | 19.89 |
| Stress at break (MPa) | n.d. | n.d. | 1.55 | 1.16 | 2.60 | 3.14 |
| Elongation at break (%) | n.d. | n.d. | 520.0 | 251.2 | 859.9 | 428.4 |
| IRHD hardness at 23°C (degrees) | n.d. | n.d. | 36.8 | 40.8 | 30.7 | 39.9 |
| IRHD hardness at 100°C (degrees) | n.d. | n.d. | 35.8 | 40.4 | 21.7 | 35.6 |

n.d.: not determined
(*) comparative
Perbunan NT® 2845 (Bayer): acrylonitrile/butadiene copolymer containing 28% by weight of acrylonitrile;
Nipol EP® 1072 (Nippon Zeon): acrylonitrile/butadiene carboxylate monomer terpolymer containing 28% by weight of acrylonitrile and 7.5% by weight of carboxylic groups;
Paraplex® G-60 (C.P. Hall): epoxidized soybean oil having: freezing point = 5°C, average molecular weight = 1,000 and epoxide equivalent weight = 210;
Poly BD® 600 (Elf Atochem): epoxidized polybutadiene with hydroxyl end groups (2.4 meq/g of hydroxyls) having: average molecular weight = 2,600, epoxide equivalent weight = 460 (configuration of epoxidized double bonds: 16% cis, 57% trans; 26% of epoxidized vinyl double bonds);
Poly BD® 605 (Elf Atochem): epoxidized polybutadiene with hydroxyl end groups (2.5 meq/g of hydroxyls) having: average molecular weight = 2,600, epoxide equivalent weight = 260 (configuration of epoxidized double bonds: 15% cis, 55% trans; 30% of epoxidized vinyl 1 double bonds).

As regards Examples 1 and 2 (comparative), there was essentially no crosslinking or in any event not enough to allow the preparation of test pieces. For this reason, the tensile properties have not been reported.

The examples given in Table 1 demonstrate that, with the compositions according to the invention, comprising a carboxylated polymer mixed with a liquid epoxidized compound, it is possible to achieve a high degree of crosslinking in short times without the addition of any conventional crosslinking system. The crosslinking does not take place either by using a polymer of similar structure but not carboxylated mixed with the same epoxidized compound, or by heating the carboxylated polymer alone.

<u>EXAMPLES 7-13</u>

The compositions given in Table 2 were prepared using the same open mixer as in Examples 1-6, with a mixing time of about 30 min, the maximum temperature reached being 100°C.

The compositions thus prepared were subjected to MDR rheometric analysis using the same rheometer and under the same conditions as in Examples 1-6.

The mechanical properties (according to ISO standard 37) and the hardness in IRHD degrees (according to ISO standard 48) were measured on samples of the abovementioned compositions crosslinked at 200°C for 15 min. The DIN abrasion values according to ISO standard 4649, expressed as a relative volume decrease with respect to the standard composition, were also measured.

As can be seen from the data given in Table 2, the composition according to the present invention, which is free of conventional crosslinking agents, makes it possible to obtain a crosslinked product whose properties are entirely comparable with those which can be obtained from the usual compositions vulcanized with sulphur. The carboxylated polymer can also include large amounts of the epoxidized liquid compound, with the production of rubber compositions which have excellent processability without thereby impairing tensile properties or abradability.

TABLE 2

| EXAMPLE | 7 | 8 | 9 | 10 | 11 | 12 | 13 |
|---|---|---|---|---|---|---|---|
| NIPOL EP® 1072 | 100 | 100 | 100 | 100 | 100 | 100 | 100 |
| PARAPLEX® G-60 | 10 | -- | -- | -- | 60 | 30 | 15 |
| POLY BD® 600 | -- | 60 | 30 | 15 | -- | -- | -- |
| ZEOSIL® 1165 MP | -- | 60 | 60 | 60 | 60 | 60 | 60 |
| Carbon black N234 | 60 | -- | -- | -- | -- | -- | -- |
| ML (dN·m) | 3.59 | 1.59 | 2.94 | 4.94 | 1.05 | 2.30 | 4.45 |
| MH (dN·m) | 26.52 | 15.55 | 19.35 | 124.37 | 27.97 | 29.14 | 25.68 |
| $t_{90}$ (sec) | 10.57 | 23.78 | 21.40 | 20.82 | 13.99 | 9.62 | 9.55 |
| Stress at break (MPa) | 23.54 | 10.05 | 12.56 | 10.45 | 11.50 | 16.74 | 19.36 |
| Elongation at break (%) | 321.5 | 875.5 | 897.1 | 848.8 | 366.9 | 415.8 | 607.7 |
| IRHD hardness at 23°C (degrees) | 81.0 | 64.5 | 75.0 | 81.9 | 70.2 | 75.7 | 78.0 |
| IRHD hardness at 100°C (degrees) | 76.7 | 54.0 | 63.6 | 68.2 | 68.9 | 71.7 | 67.0 |
| Abrasion DIN (mm3) | 76 | 194 | 114 | 109 | 127 | 102 | 95 |
| Zeosil® 1165 MP: precipitated silica with a BET surface area equal to about 165 m/g (Rhóne-Poulenc) | | | | | | | |

EXAMPLES 14-16

The compositions given in Table 3 were prepared by the same methods used in Examples 1-6. The compositions of Examples 14 and 15 (comparative) use epoxy resins containing only epoxide end groups as crosslinking agents, while the composition of Example 16 was formulated according to the present invention.

The Mooney ML (1+4) viscosity at 100°C was measured on the non-crosslinked compositions, according to ISO standard 289/1. The compositions were then subjected to MDR rheometric analysis using the same rheometer and under the same conditions as in Examples 1-6. The mechanical properties (according to ISO standard 37), the hardness in IRHD degrees (according to ISO standard 48) and the DIN abrasion (according to ISO standard 4649) were measured on samples of the said compositions crosslinked at 200°C for 15 min. The results are given in Table 3.

Table 3 also shows the dynamic elastic modulus values (E') measured at 23°C and at 70°C using an Instron dynamic machine in traction-compression according to the following method. A test sample of the crosslinked material, of cylindrical shape (length = 25 mm; diameter = 14 mm), preloaded in compression up to a longitudinal deformation of 10% relative to the initial length, and kept at a preset temperature (23°C or 70°C) throughout the test, was subjected to a dynamic sinusoidal deformation of amplitude $\pm$ 3.33% relative to the length under pre-loading, with a frequency of 100 Hz.

TABLE 3

| EXAMPLE | 14 (*) | 15 (*) | 16 |
|---|---|---|---|
| NIPOL EP® 1072 | 100 | 100 | 100 |
| EUREPOX® 710 | 60 | -- | -- |
| EUREPOX® 720 LV | -- | 60 | -- |
| PARAPLEX® G-60 | -- | -- | 60 |
| ZEOSIL® 1165 MP | 60 | 60 | 60 |
| VULCANOX® 4020 | 1.5 | 1.5 | 1.5 |
| Mooney viscosity ML (1+4) at 100°C | 79.0 | 114.4 | 34.0 |
| ML (dN·m) | 1.17 | 1.17 | 1.19 |
| MH (dN·m) | 41.03 | 41.65 | 31.42 |

(continued)

| EXAMPLE | 14 (*) | 15 (*) | 16 |
|---|---|---|---|
| $t_{90}$ (sec) | 15.54 | 15.37 | 15.15 |
| Stress at break (MPa) | 11.40 | 14.05 | 11.63 |
| Elongation at break (%) | 161.6 | 176.6 | 295.6 |
| IRHD hardness at 23°C (degrees) | 85.7 | 80.5 | 73.3 |
| IRHD hardness at 100°C (degrees) | 74.1 | 74.8 | 66.2 |
| DIN abrasion ($mm^3$) | 99 | 104 | 119 |
| E' at 23°C (MPa) | 24.8 | 28.1 | 12.8 |
| E' at 70°C (MPa) | 10.4 | 12.3 | 8.5 |
| $\Delta$E' (MPa) | 14.4 | 15.8 | 4.3 |

(*) comparative
Eurepox® 710 (Witco): high viscosity epoxy resin of bisphenol A diglyceridyl ether;
Eurepox® 720 LV (Witco): low viscosity epoxy resin of bisphenol A diglyceridyl ether;
Vulcanox® 4020 (Bayer): anti-fatigue agent (TMQ).

As can be seen, compared with the compositions in which the carboxylated polymer is crosslinked with epoxy resins containing only epoxide end groups, the compositions according to the invention make it possible to obtain rubber compositions of improved processability (lower Mooney viscosity) and crosslinked products in which improved elastic properties (in particular higher elongation at break) are accompanied by lower hardness.

In addition, the crosslinked compositions according to the present invention show very limited variation in the dynamic elastic modulus as the temperature varies, this variation being appreciably less than that encountered in the compositions crosslinked with epoxy resins. This property indicates a lower "thermoplasticity" of the crosslinked compositions according to the present invention, i.e. essentially constant elastic performance qualities over a wide temperature range, and is of fundamental importance when using the compositions in the manufacture of tyres.

EXAMPLES 17-18

The following were prepared using the same open mixer as in Examples 1-6:

- a composition having, as polymer base, a polymer carboxylated according to a standard procedure for vulcanization with sulphur (see "The Vanderbilt Rubber Handbook" - 1978 edition, page 534) (Comparative Example 17);
- an analogous composition devoid of sulphur or derivatives thereof and comprising an epoxidized oil according to the present invention (Example 18).

The compositions are given in Table 4. In the composition of Example 17, cumarone/indene resin, trioctyl phthalate and stearic acid act as processing coadjuvants and plasticizers, while 6PPD is an anti-ageing additive (Santoflex® 13 from Monsanto) and MBTS is a vulcanization accelerator (2-mercaptobenzothiazole disulphide - Vulkacit Merkapto® from Bayer).

The compositions thus prepared were subjected to MDR rheometric analysis at 170°C for 30 min and at 200°C for 30 min, according to the method given for Examples 1-6. The results are given in Table 4. The optimum crosslinking conditions for the two compositions were determined from the curves thus obtained: 10 min at 170°C for the composition of Example 17 (comparative), 15 min at 200°C for the composition of Example 18 (invention).

Mechanical properties, IRHD hardness, DIN abrasion and dynamic elastic modulus (E') at 23°C and 70°C were measured on samples of the abovementioned compositions crosslinked under the optimum conditions, according to the methods given above. For completeness, the same measurements were carried out on the compositions of Example 17 crosslinked at 200°C for 15 min. The results are given in Table 5.

TABLE 4

| EXAMPLE | 17(*) | 18 |
|---|---|---|
| NIPOL EP® 1072 | 100 | 100 |
| PARAPLEX® G-60 | -- | 60 |
| Carbon black N324 | 60 | 60 |
| Stearic acid | 1.5 | -- |
| Cumarone/indene resin | 12.5 | -- |
| Trioctyl phthalate | 12.5 | -- |
| Sulphur | 1.75 | -- |
| ZnO | 5 | -- |
| 6PPD | 1.5 | -- |
| MBTS | 1.5 | -- |
| MDR curve at 170°C/30 min | | |
| ML(dN·m) | 2.02 | 0.74 |
| MH(dN·m) | 19.39 | 10.07 |
| $t_{90}$ (sec) | 16.67 | 26.98 |
| MDR curve at 200°C/30 min | | |
| ML (dN·m) | 1.81 | 0.15 |
| MH (dN·m) | 17.76 | 29.97 |
| $t_{90}$ (sec) | 12.26 | 17.90 |
| (*) comparative | | |

TABLE 5

| EXAMPLE | 17(*) | | 18 |
|---|---|---|---|
| Crosslinking conditions | 10 min at 170°C | 15 min at 200°C | 15 min at 200°C |
| Stress at break (MPa) | 15.9 | 15.7 | 10.0 |
| Elongation at break (%) | 427 | 279 | 235 |
| IRHD hardness at 23°C (degrees) | 75.7 | 80.0 | 67.0 |
| IRHD hardness at 100°C (degrees) | 57.8 | 62.0 | 62.0 |
| E' at 23°C (MPa) | 19.03 | 20.49 | 12.26 |
| E' at 70°C (MPa) | 8.98 | 14.63 | 7.57 |
| DIN abrasion (mm$^3$) | 80.7 | 64.7 | 91.1 |
| (*) comparative | | | |

By comparing the data given in Table 5, it can be noted that the compositions according to the present invention make it possible to obtain, under optimum crosslinking conditions, a crosslinked material which has excellent mechanical properties and low abradability, with dynamic elastic modulus values which are relatively independent of the temperature, and thus thermoplasticity lower than analogous compositions crosslinked with sulphur.

EXAMPLES 19-21

For the purpose of evaluating the properties of the crosslinked compositions according to the present invention relative to conventional compositions for tread bands vulcanized with rubber, three different compositions were prepared containing silica as reinforcing filler, using a Banbury mixer with tangential rotors and having a volume equal to 1.5 1.

In Example 19 (comparative), the composition had a typical composition for tread bands vulcanized with sulphur, as described in Patent EP-501,227. In accordance with the teachings of that patent, for the purpose of optimizing the dispersion of silica and the reaction between the coupling agent (silane) and silica, the composition was prepared by means of a multi-step thermomechanical processing method: a first step of mechanical mixing of the polymer base, the filler and the processing coadjuvants until a maximum temperature exceeding 145°C was reached, a step of cooling down to a temperature below 60°C, and a second step of mechanical mixing until a maximum temperature exceeding 145°C was reached, in which step the other components of the composition (except for the crosslinking system) were added. Finally, the crosslinking system was added with mixing at a temperature below 100°C.

On the other hand, the compositions of Examples 20-21 (invention) were prepared in a Banbury mixer in a single passage, with a rotor speed of 65 rpm and a temperature of the mixer-cooling water of about 40°C.

The Mooney viscosity ML (1+4) at 100°C was measured on the non-crosslinked compositions, according to ISO standard 289/1. The compositions were then subjected to MDR rheometric analysis using the same rheometer and under the same conditions as in Examples 1-6. The optimum crosslinking conditions were determined on the basis of the rheometric analysis, i.e. 10 min at 170°C for the comparative composition (Example 19) and 15 min at 200°C for the compositions according to the invention (Examples 20-21).

The mechanical properties (according to ISO standard 37) and the hardness in IRHD degrees at 23°C and at 100°C (according to ISO standard 48) were measured on samples of the abovementioned compositions crosslinked under the optimum conditions. The dynamic elastic properties of the samples at 0°C and at 70°C were also evaluated by measurement in traction-compression according to the method described for Examples 14-16. The results are given in Table 6. The dynamic elastic properties are expressed in terms of E' and tan delta (loss factor) at 0°C and at 70°C. As is known, the tan delta value is calculated as the ratio between the viscous modulus (E") and the elastic modulus (E'), both determined by means of the above dynamic measurements.

TABLE 6

| EXAMPLE | 19 (*) | 20 | 21 |
|---|---|---|---|
| S-SBR | 70 | -- | -- |
| BR | 30 | -- | -- |
| NIPOL EP® 1072 | -- | 100 | 100 |
| ZEOSIL® 1165 MP | 63 | 60 | 70 |
| PARAPLEX® G-60 | -- | 60 | 70 |
| X50S | 10 | -- | -- |
| Aromatic oil | 5 | -- | -- |
| ZnO | 3 | -- | -- |
| Stearic acid | 2 | -- | -- |
| CBS | 2 | -- | -- |
| DPG | 1 | -- | -- |
| Antioxidants | 4 | 3 | 3 |
| Sulphur | 1.2 | -- | -- |
| Viscosity (ML 1+4) at 100°C | 73 | 29.4 | 32.8 |
| Stress at break (MPa) | 14.8 | 10.64 | 11.64 |
| Elongation at break (%) | 460.1 | 387 | 413.5 |
| IRHD hardness at 23°C (degrees) | 73.1 | 70.2 | 75.2 |
| IRHD hardness at 100°C (degrees) | 66.4 | 68.9 | 67 |
| E' at 0 °C (MPa) | 19 . 93 | 22.2 | 25.6 6 |
| E' at 70°C (MPa) | 5.87 | 7.64 | 9.13 |
| Tan delta at 0°C | 0.587 | 0.718 | 0.657 |

(continued)

| EXAMPLE | 19 (*) | 20 | 21 |
|---|---|---|---|
| Tan delta at 70°C | 0.144 | 0.160 | 0.159 |

(*) comparative
S-SBR: solution butadiene-styrene copolymer, with a styrene content equal to 20% by weight and a content of vinyl groups equal to 60% by weight (product Buna VSL® 5025-1 HM from Bayer);
BR: polybutadiene (product Europrene Neocis® from Enichem);
X50S: silane coupling agent comprising 50% by weight of carbon black and 50% by weight of bis(3-triethoxysilylpropyl) tetrasulphide (produced by Degussa);
CBS: accelerating agent (N-cyclohexyl-2-benzothiazylsulphenamide - product Santocure® from Monsanto);
DPG: accelerating agent (diphenylguanidine from Monsanto).

From the data given in Table 6, it is clear that the compositions according to the present invention make it possible to obtain a crosslinked product which has properties similar to those which can be obtained by crosslinking a conventional tread band composition with sulphur. The following can also be noted for the compositions crosslinked according to the present invention:

- a value of tan delta at 0°C, which, as is known, is an index for wet grip, which is higher and thus better than that obtained with the reference composition;
- a value of E' at 70°C, which, as is known, is an index for stability of the tread band on curves under "dry handling" conditions, which is higher and thus indicates a better response of the tyre to stresses on curves than that which can be obtained with the reference composition.

It is also important to note that, for substantially equivalent performance qualities, the composition formulation achieved an appreciable simplification compared with that of a conventional composition (from 11 to 4 ingredients), with obvious advantages for industrial production. In particular, besides not containing a system vulcanized with sulphur, the compositions according to the invention, when filled with silica, do not require the presence of a coupling agent for the silica or a complex thermomechanical processing method in order to obtain a good dispersion and compatibilization of the filler in the polymer matrix.

EXAMPLES 22-24 (comparative)

The composition according to Example 20 was compared with analogous compositions in which the epoxidized soybean oil was replaced with an epoxidized elastomeric polymer (epoxidized natural rubber) having high molecular weight, optionally as a mixture with aromatic oil to improve the processability.

The compositions were prepared in an open mixer according to the method given for Examples 1-6. The Mooney ML (1+4) viscosity at 100°C was measured on the non-crosslinked compositions, according to ISO standard 289/1. The compositions were then subjected to MDR rheometric analysis using the same rheometer and under the same conditions as in Examples 1-6. The mechanical properties (according to ISO standard 37), the hardness in IRHD degrees (according to ISO standard 48) and the dynamic properties (E', tan delta) at 0°C and at 70°C were measured according to the method given above on samples of the abovementioned compositions crosslinked at 200°C for 15 min. The compositions and the results are given in Table 7.

TABLE 7

| | 20 | 22(*) | 23(*) | 24 (*) |
|---|---|---|---|---|
| NIPOL EP® 1072 | 100 | 50 | 50 | 50 |
| EPOXYPRENE® ENR 50 | -- | 50 | 50 | 50 |
| Carbon black N234 | -- | -- | -- | 60 |
| ZEOSIL® 1165 MP | 60 | 40 | 60 | -- |
| FARAPLEX® G-60 | 60 | -- | -- | -- |

(continued)

| | 20 | 22(*) | 23(*) | 24 (*) |
|---|---|---|---|---|
| Antioxidants | 3 | 3 | 3 | 3 |
| Aromatic oil | -- | -- | 20 | -- |
| Mooney viscosity ML (1+4) at 100°C | 29.4 | n.d. | n.d. | n.d. |
| ML (dN · m) | 0.83 | 3.03 | 4.28 | 5.52 |
| MH (dN.m) | 22. 19 | 39.03 | 26.7 | 41.45 |
| $t_{90}$ (sec) | 15.52 | 17.03 | 18.92 | 12.33 |
| Stress at break (MPa) | 10.64 | 8.55 | 7.89 | 20.22 |
| Elongation at break (%) | 387.0 | 72.0 | 132.0 | 141.8 |
| IRHD hardness at 23°C (degrees) | 70.2 | 81.0 | 80.7 | 90.4 |
| IRHD hardness at 100°C (degrees) | 68.9 | 78 | 74 | 81.4 |
| E' at 0°C (MPa) | 22.2 | n.d. | n.d. | n.d. |
| E' at 70°C (MPa) | 7.64 | 11.7 | 8.8 | 23.5 |
| Tan delta at 0°C | 0.718 | n.d. | n.d. | n.d. |
| Tan delta at 70°C | 0.160 | 0.104 | 0.160 | 0.202 |
| (*) comparative<br>n.d.: not determined | | | | |

Epoxyprene® ENR 50: epoxidized natural rubber containing 50 mol% of epoxide groups and having an average molecular weight of greater than 100,000 (produced by Guthrie).

From the results given in Table 7, it can be seen that:

- the Mooney viscosity values for the comparative compositions are extremely high, exceeding the maximum limit of the measuring instrument; thus, processability of these compositions is very poor (this fact is demonstrated by the rheometric curves, in which the ML values for the comparative compositions are high) ;
- the comparative crosslinked compositions have inferior tensile properties, and in particular low values of elongation at break;
- the hardness values of the comparative crosslinked compositions are high, even with small amounts of filler, thus making them totally unsuitable for the manufacture of tread bands;
- the dynamic performance qualities of the comparative compositions are inferior, in particular as regards the tan delta values at 0°C, which were not determined since they exceeded the maximum limit of the measuring instrument.

**Claims**

1. Process for producing tyres for vehicle wheels,
the said process comprising the following steps:

manufacturing a green tyre comprising at least one crosslinkable elastomeric material;
subjecting the green tyre to moulding in a mould cavity defined in a vulcanization mould;
crosslinking the elastomeric material by heating the tyre to a predetermined temperature and for a predetermined time;

**characterized in that** the crosslinkable elastomeric material comprises: (a) an elastomeric polymer containing carboxylic groups having an average molecular weight of between 2,000 and 1,000,000, and (b) an epoxidized liquid organic compound containing at least two internal epoxide groups, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain;

the said crosslinking step being carried out substantially in the absence of additional crosslinking agents.

2. Process according to Claim 1, wherein the crosslinking step is carried out by heating the crosslinkable elastomeric material to a temperature of at least 120°C for a time of at least 3 minutes.

3. Process according to Claim 2, wherein the crosslinking step is carried out by heating the crosslinkable elastomeric material to a temperature of at least 160°C for a time of at least 10 minutes.

4. Process according to any one of the preceding claims, wherein the elastomeric material also comprises a reinforcing filler.

5. Process according to claim 4, wherein the reinforcing filler is present in an amount of between 20 and 120 phr.

6. Process according to claim 5, wherein the reinforcing filler is present in an amount of between 40 and 90 phr.

7. Process according to any one of the preceding claims, wherein the epoxidized liquid organic compound has an epoxide equivalent weight of between 40 and 2,000.

8. Process according to claim 7, wherein the epoxidized liquid organic compound has an epoxide equivalent weight of between 50 and 1,500.

9. Process according to claim 8, wherein the epoxidized liquid organic compound has an epoxide equivalent weight of between 100 and 1,000.

10. Process according to any one of the preceding claims, wherein the epoxidized liquid organic compound comprises an epoxidized oil.

11. Process according to Claim 10, wherein the epoxidized oil has a freezing temperature lower than 23°C.

12. Process according to any one of the preceding claims, wherein the epoxidized liquid organic compound comprises an epoxidized diene oligomer.

13. Process according to Claim 12, wherein the epoxidized diene oligomer has an average molecular weight of between 500 and 10,000.

14. Process according to Claim 13, wherein the epoxidized diene oligomer has an average molecular weight of between 1,000 and 8,000.

15. Process according to Claims from 12 to 14, wherein the epoxidized diene oligomer is an epoxidized oligomer of 1,3-butadiene or isoprene, or mixtures thereof.

16. Process according to any one of the preceding claims, wherein the elastomeric polymer containing carboxylic groups is a homopolymer or copolymer containing at least 0.1 mol% of carboxylic groups, relative to the total number of moles of monomers in the polymer.

17. Process according to claim 16, wherein the carboxylated elastomeric polymer contains from 1 to 30 mol%, of carboxylic groups.

18. Process according to any one of the preceding claims, wherein the carboxylated elastomeric polymer has an average molecular weight of between 50,000 and 500,000.

19. Process according to any one of the preceding claims, wherein the carboxylated elastomeric polymer is obtained by (co)polymerization of one or more conjugated diene monomers, optionally in admixture with monovinylarenes and/or polar comonomers, and subsequent carboxylation.

20. Process according to any one of Claims 1 to 18, wherein the carboxylated elastomeric polymer is obtained by copolymerization between a conjugated diene, optionally in admixture with monovinylarenes and/or polar comonomers, and an olefinic monomer containing one or more carboxylic groups or derivatives thereof.

21. Process according to any one of Claims 1 to 18, wherein the carboxylated elastomeric polymer is obtained by copolymerization of one or more monoolefins with an olefinic comonomer containing one or more carboxylic groups or derivatives thereof.

22. Process according to any one of the preceding claims, wherein the epoxidized liquid compound is present in an amount of between 5 and 200 parts by weight per 100 parts.by weight of elastomeric polymer.

23. Process according to claim 22, wherein the epoxidized liquid compound is present in an amount of between 10 and 120 parts by weight per 100 parts by weight of elastomeric polymer.

24. Process according to any one of the preceding claims, wherein the crosslinkable elastomeric material comprises an effective amount of a condensation catalyst.

25. Tyre for vehicle wheels, comprising one or more components made of crosslinked elastomeric material, **characterized in that** at least one of the said components comprises, as crosslinked elastomeric material, an elastomeric polymer containing carboxylic groups having an average molecular weight of between 2,000 and 1,000,000 which is crosslinked by reaction with an epoxidized liquid organic compound containing at least two internal epoxide groups, each epoxide group having one oxirane bridge connecting:

> (i) two adjacent carbon atoms located on the main chain, with the condition that neither of the said two adjacent carbon atoms is a terminal carbon atom of this chain; or
> (ii) two adjacent carbon atoms located on a side chain;

> wherein the said carboxylated elastomeric polymer is crosslinked substantially in the absence of additional crosslinking agents.

26. Tyre according to Claim 25, wherein the said crosslinked elastomeric material also comprises a reinforcing filler.

27. Tyre according to Claim 26, wherein the reinforcing filler is present in an amount of between 20 and 120 phr

28. Tyre according to Claim 27, wherein the reinforcing filler is present in an amount of between 40 and 90 phr

29. Tyre according to any one of Claims 25 to 28, wherein the epoxidized liquid organic compound is defined according to any one of Claims 7 to 15.

30. Tyre according to any one of Claims 25 to 29, wherein the elastomeric polymer containing carboxylic groups is defined according to any one of Claims 16 to 21.

31. Tyre for vehicles, comprising a belt structure extended coaxially around a carcass structure and a tread band extended coaxially around the belt structure and having an external rolling surface which is intended to come into contact with the ground, **characterized in that** the said tread band comprises an elastomeric polymer containing carboxylic groups having an average molecular weight of between 2,000 and 1,000,000 crosslinked by reaction with an epoxidized liquid organic compound containing at least two internal epoxide groups, each epoxide group having one oxirane bridge connecting:

> (i) two adjacent carbon atoms located on the main chain, with the condition that neither of the said two adjacent carbon atoms is a terminal carbon atom of this chain; or
> (ii) two adjacent carbon atoms located on a side chain; and wherein the said carboxylated elastomeric polymer is crosslinked substantially in the absence of additional crosslinking agents.

32. Tyre according to Claim 31, wherein the tread band also comprises a reinforcing filler.

33. Tyre according to claim 32, wherein the reinforcing filler is present in an amount of between 20 and 120 phr

**34.** Tyre according to Claim 33, wherein the reinforcing filler is present in an amount of between 40 and 90 phr

**35.** Tyre according to any one of Claims 31 to 34, wherein the epoxidized liquid organic compound is defined according to any one of Claims 7 to 15.

**36.** Tyre according to any one of Claims 31 to 35, wherein the elastomeric polymer containing carboxylic groups is defined according to any one of Claims 16 to 21.

**37.** Crosslinked elastomeric composition consisting essentially of:

(a) an elastomeric polymer containing carboxylic groups having an average molecular weight of between 2,000 and 1,000,000;
(b) an epoxidized liquid organic compound containing at least two internal epoxide groups, each epoxide group having one oxirane bridge connecting:

(i) two adjacent carbon atoms located on the main chain, with the condition that neither of the said two adjacent carbon atoms is a terminal carbon atom of this chain; or
(ii) two adjacent carbon atoms located on a side chain; and

(c) at least one additional ingredient selected from the group consisting of reinforcing fillers, antioxidants, protective agents, plasticizers, compatibilizing agents for the reinforcing fillers, adhesives, anti-ozone agents, modifying resins, fibres, a lubricant, and a condensation catalyst;

the said composition being crosslinked substantially in the absence of additional crosslinking agents.

**38.** Composition according to Claim 37, wherein the reinforcing filler is present in an amount of between 20 and 120 phr.

**39.** Composition according to Claim 38, wherein the reinforcing filler is present in an amount of between 40 and 90 phr.

**40.** Composition according to Claim 37 to 39, wherein the epoxidized liquid organic compound has an epoxide equivalent weight of between 40 and 2,000.

**41.** Composition according to Claim 40, wherein the epoxidized liquid organic compound has an epoxide equivalent weight of between 50 and 1,500.

**42.** Composition according to Claim 41, wherein the epoxidized liquid organic compound has an epoxide equivalent weight of between 100 and 1,000.

**43.** Composition according to any one of Claims 37 to 42, wherein the epoxidized liquid organic compound comprises an epoxidized oil.

**44.** Composition according to Claim 43, wherein the epoxidized oil has a freezing temperature lower than 23°C.

**45.** Composition according to any one of Claims 37 to 44, wherein the epoxidized liquid organic compound comprises an epoxidized diene oligomer.

**46.** Composition according to Claim 45, wherein the epoxidized diene oligomer has an average molecular weight of between 500 and 10,000.

**47.** Composition according to Claim 46, wherein the epoxidized diene oligomer has an average molecular weight of between 1,000 and 8,000.

**48.** Composition according to Claims from 37 to 47, wherein the epoxidized diene oligomer is an epoxidized oligomer of 1,3-butadiene or isoprene, or mixtures thereof.

**49.** Composition according to any one of Claims 37 to 48, wherein the elastomeric polymer containing carboxylic groups is a homopolymer or copolymer containing at least 0.1 mol% of carboxylic groups relative to the total number of moles of monomers present in the polymer.

**50.** Composition according to claim 49, wherein the carboxylated elastomeric polymer contains from 1 to 30 mol% of carboxylic groups.

**51.** Composition according to any one of claims 37 to 50, wherein the carboxylated elastomeric polymer has an average molecular weight of between 50,000 and 500,000.

**52.** Composition according to any one of Claims 37 to 51, wherein the carboxylated elastomeric polymer is obtained by (co)polymerization of one or more conjugated diene monomers, optionally in admixture with monovinylarenes and/or polar comonomers, and subsequent carboxylation.

**53.** Composition according to any one of Claims 37 to 51, wherein the carboxylated elastomeric polymer is obtained by copolymerization between a conjugated diene, optionally in admixture with monovinylarenes and/or polar comonomers, and an olefinic monomer containing one or more carboxylic groups, or a derivative thereof.

**54.** Composition according to any one of Claims 37 to 51, wherein the carboxylated elastomeric polymer is obtained by copolymerization of one or more monoolefins with an olefinic comonomer containing one or more carboxylic groups or derivatives thereof.

**55.** Composition according to any one of Claims 37 to 54, wherein the epoxidized liquid compound is present in an amount of between 5 and 200 parts by weight per 100 parts by weight of elastomeric polymer.

**56.** Composition according to claim 55, wherein the epoxidized liquid compound is present in an amount of between between 10 and 120 parts by weight per 100 parts by weight of elastomeric polymer

**57.** Composition according to any one of Claims 37 to 56, also comprising an effective amount of a condensation catalyst.

**58.** Crosslinked elastomeric product obtained by crosslinking a composition according to any one of Claims 37 to 57.

**Patentansprüche**

**1.** Verfahren zur Herstellung von Reifen für Fahrzeugräder, wobei das Verfahren die folgenden Schritte aufweist:

- Herstellen eines Rohreifens, der wenigstens ein vernetzbares elastomeres Material aufweist,
- Unterwerfen des Rohreifens einem Ausformen in einem Formhohlraum, der in einer Vulkanisierform ausgebildet ist,
- Vernetzen des elastomeren Materials durch Erhitzen des Reifens auf eine vorgegebene Temperatur und über eine vorgegebene Zeit,

**dadurch gekennzeichnet, dass** das vernetzbare elastomere Material

(a) ein Carboxylgruppen enthaltendes elastomeres Polymer mit einem mittleren Molekulargewicht zwischen 2.000 und 1.000.000 und
(b) eine epoxidierte flüssige organische Verbindung aufweist, die wenigstens zwei innere Epoxidgruppen enthält, von denen jede eine Oxiranbrücke hat, die

(i) zwei benachbarte, auf der Hauptkette befindliche Kohlenstoffatome unter der Bedingung, dass keines der beiden benachbarten Kohlenstoffatome ein Kohlenstoffendatom dieser Kette ist, oder
(ii) zwei benachbarte, auf einer Seitenkette befindliche Kohlenstoffatome verbindet,

- wobei der Vernetzungsschritt im Wesentlichen bei Abwesenheit von zusätzlichen Vernetzungsmitteln ausgeführt wird.

**2.** Verfahren nach Anspruch 1, bei welchem der Vernetzungsschritt durch Erhitzen des vernetzbaren elastomeren Materials auf eine Temperatur von wenigstens 120°C während einer Zeit von wenigstens 3 Minuten ausgeführt wird.

**3.** Verfahren nach Anspruch 2, bei welchem der Vernetzungsschritt durch Erhitzen des vernetzbaren elastomeren Materials auf eine Temperatur von wenigstens 160°C während einer Zeit von wenigstens 10 Minuten ausgeführt wird.

**4.** Verfahren nach einem der vorhergehenden Ansprüche, bei welchem das elastomere Material auch einen verstärkenden Füllstoff aufweist.

**5.** Verfahren nach Anspruch 4, bei welchem der verstärkende Füllstoff in einer Menge zwischen 20 und 120 phr vorhanden ist.

**6.** Verfahren nach Anspruch 5, bei welchem der verstärkende Füllstoff in einer Menge zwischen 40 und 90 phr vorhanden ist.

**7.** Verfahren nach einem der vorhergehenden Ansprüche, bei welchem die epoxidierte flüssige organische Verbindung ein Epoxid-Äquivalentgewicht zwischen 40 und 2000 hat.

**8.** Verfahren nach Anspruch 7, bei welchem die epoxidierte flüssige organische Verbindung ein Epoxid-Äquivalentgewicht zwischen 50 und 1500 hat.

**9.** Verfahren nach Anspruch 8, bei welchem die epoxidierte flüssige organische Verbindung ein Epoxid-Äquivalentgewicht zwischen 100 und 1000 hat.

**10.** Verfahren nach einem der vorhergehenden Ansprüche, bei welchem die epoxidierte flüssige organische Verbindung ein epoxidiertes Öl aufweist.

**11.** Verfahren nach Anspruch 10, bei welchem das epoxidierte Öl eine Erstarrungstemperatur hat, die niedriger als 23°C ist.

**12.** Verfahren nach einem der vorhergehenden Ansprüche, bei welchem die epoxidierte flüssige organische Verbindung ein epoxidiertes Dienoligomer aufweist.

**13.** Verfahren nach Anspruch 12, bei welchem das epoxidierte Dienoligomer ein mittleres Molekulargewicht zwischen 500 und 10.000 hat.

**14.** Verfahren nach Anspruch 13, bei welchem das epoxidierte Dienoligomer ein mittleres Molekulargewicht zwischen 1.000 und 8.000 hat.

**15.** Verfahren nach den Ansprüchen 12 bis 14, bei welchem das epoxidierte Dienoligomer ein epoxidiertes Oligomer von 1,3-Butadien oder Isopren oder Mischungen davon ist.

**16.** Verfahren nach einem der vorhergehenden Ansprüche, bei welchem das Carboxylgruppen enthaltende elastomere Polymer ein Homopolymer oder Copolymer ist, das wenigstens 0,1 Mol% Carboxylgruppen bezogen auf die Gesamtmolzahl der Monomere in dem Polymer enthält.

**17.** Verfahren nach Anspruch 16, bei welchem das carboxylierte elastomere Polymer 1 bis 30 Mol% Carboxylgruppen enthält.

**18.** Verfahren nach einem der vorhergehenden Ansprüche, bei welchem das carboxylierte elastomere Polymer ein mittleres Molekulargewicht zwischen 50,000 und 500,000 hat.

**19.** Verfahren nach einem der vorhergehenden Ansprüche, bei welchem das carboxylierte elastomere Polymer durch (Co-)Polymerisation von einem oder mehreren konjugierten Dienmonomeren, optional in Mischung mit Monovinylarenen und/oder polaren Comonomeren, und darauffolgende Carboxylierung erhalten wird.

**20.** Verfahren nach einem der Ansprüche 1 bis 18, bei welchem das carboxylierte elastomere Polymer durch Copolymerisation zwischen einem konjugierten Dien, optional in Mischung mit Monovinylarenen und/oder polaren Comonomeren, und einem olefinischen Monomer erhalten wird, das ein oder mehrere Carboxylgruppen oder Derivate davon enthält.

**21.** Verfahren nach einem der Ansprüche 1 bis 18, bei welchem das carboxylierte elastomere Polymer durch Copolymerisation von einem oder mehreren Monoolefinen mit einem olefinischen Comonomer erhalten wird, das ein oder mehrere Carboxylgruppen oder Derivate davon enthält.

22. Verfahren nach einem der vorhergehenden Ansprüche, bei welchem die epoxidierte flüssige Verbindung in einer Menge zwischen 5 und 200 Gewichtsteilen pro 100 Gewichtsteilen elastomerem Polymer vorhanden ist.

23. Verfahren nach Anspruch 22, bei welchem die epoxidierte flüssige Verbindung in einer Menge zwischen 10 und 120 Gewichtsteilen pro 100 Gewichtsteilen elastomerem Polymer vorhanden ist.

24. Verfahren nach einem der vorhergehenden Ansprüche, bei welchem das vernetzbare elastomere Material eine wirksame Menge eines Kondensationskatalysators aufweist.

25. Reifen für Fahrzeugräder mit einer oder mehreren Komponenten aus einem vernetzten elastomeren Material, **dadurch gekennzeichnet,**

- **dass** wenigstens eine der Komponenten als vernetztes elastomeres Material ein Carboxylgruppen enthaltendes elastomeres Polymer mit einem mittleren Molekulargewicht zwischen 2.000 und 1.000.000 aufweist, das durch Reaktion mit einer epoxidierten flüssigen organischen Verbindung vernetzt ist, die wenigstens zwei innere Epoxidgruppen enthält, von denen jede eine Oxiranbrücke aufweist, die

(i) zwei benachbarte, auf der Hauptkette befindliche Kohlenstoffatome unter der Bedingung, dass keines der beiden benachbarten Kohlenstoffatome ein Kohlenstoffendatom dieser Kette ist, oder
(ii) zwei benachbarte, auf einer Seitenkette befindliche Kohlenstoffatome verbindet,

- wobei das carboxylierte elastomere Polymer im Wesentlichen bei Abwesenheit von zusätzlichen Vernetzungsmitteln vernetzt ist.

26. Reifen nach Anspruch 25, bei welchem das vernetzte elastomere Material auch einen verstärkenden Füllstoff aufweist.

27. Reifen nach Anspruch 26, bei welchem der verstärkende Füllstoff in einer Menge zwischen 20 und 120 phr vorhanden ist.

28. Reifen nach Anspruch 27, bei welchem der verstärkende Füllstoff in einer Menge zwischen 40 und 90 phr vorhanden ist.

29. Reifen nach einem der Ansprüche 25 bis 28, bei welchem die epoxidierte flüssige organische Verbindung nach einem der Ansprüche 7 bis 15 definiert ist.

30. Reifen nach einem der Ansprüche 25 bis 29, bei welchem das Carboxylgruppen enthaltende elastomere Polymer nach einem der Ansprüche 16 bis 21 definiert ist.

31. Reifen für Fahrzeuge

- mit einem Gurtaufbau, der sich koaxial um einen Karkassenaufbau erstreckt, und
- mit einem Laufflächenband, das sich koaxial um den Gurtaufbau erstreckt und eine äußere Rollfläche hat, die für das In-Kontakt-Kommen mit dem Boden vorgesehen ist,

**dadurch gekennzeichnet,**

- **dass** das Laufflächenband ein Carboxylgruppen enthaltendes elastomeres Polymer aufweist, das ein mittleres Molekulargewicht zwischen 2.000 und 1.000.000 hat und durch Reaktion mit einer epoxidierten flüssigen organischen Verbindung vernetzt ist, die wenigstens zwei innere Epoxidgruppen enthält, von denen jede eine Oxiranbrücke hat, die

(i) zwei benachbarte, auf der Hauptkette befindliche Kohlenstoffatome unter der Bedingung, dass keines der beiden benachbarten Kohlenstoffatome ein Kohlenstoffendatom dieser Kette ist, oder
(ii) zwei benachbarte, auf einer Seitenkette befindliche Kohlenstoffatome verbindet,

- wobei das carboxylierte elastomere Polymer im Wesentlichen bei Abwesenheit von zusätzlichen Vernetzungsmitteln vernetzt ist.

**32.** Reifen nach Anspruch 31, bei welchem das Laufflächenband auch einen verstärkenden Füllstoff aufweist.

**33.** Reifen nach Anspruch 32, bei welchem der verstärkende Füllstoff in einer Menge zwischen 20 und 120 phr vorhanden ist.

**34.** Reifen nach Anspruch 33, bei welchem der verstärkende Füllstoff in einer Menge zwischen 40 und 90 phr vorhanden ist.

**35.** Reifen nach einem der Ansprüche 31 bis 34, bei welchem die epoxidierte flüssige organische Verbindung nach einem der Ansprüche 7 bis 15 definiert ist.

**36.** Reifen nach einem der Ansprüche 31 bis 35, bei welchem das Carboxylgruppen enthaltende elastomere Polymer nach einem der Ansprüche 16 bis 21 definiert ist.

**37.** Vernetzte elastomere Mischung bestehend im Wesentlichen aus

(a) einem Carboxylgruppen enthaltenden elastomeren Polymer mit einem mittleren Molekulargewicht zwischen 2.000 und 1.000.000,
(b) einer epoxidierten flüssigen organischen Verbindung, die wenigstens zwei innere Epoxidgruppen enthält, von denen jede eine Oxiranbrücke hat, die

(i) zwei benachbarte, auf der Hauptkette befindliche Kohlenstoffatome unter der Bedingung, dass keines der beiden benachbarten Kohlenstoffatome ein Kohlenstoffendatom dieser Kette ist, oder
(ii) zwei benachbarte, auf einer Seitenkette befindliche Kohlenstoffatome verbindet, und

(c) wenigstens einem zusätzlichen Bestandteil, das aus der Gruppe ausgewählt ist, die aus verstärkenden Füllstoffen, Antioxidantien, Schutzmitteln, Weichmachern, Kompatibilisierungsmitteln für die verstärkenden Füllstoffe, Haftstoffe, Antiozonmittel, modifizierende Harze, Fasern, Schmiermittel und einem Kondensationskatalysator besteht,
- wobei die Mischung im Wesentlichen bei Abwesenheit von zusätzlichen Vernetzungsmitteln vernetzt ist.

**38.** Mischung nach Anspruch 37, bei welcher der verstärkende Füllstoff in einer Menge zwischen 20 und 120 phr vorhanden ist.

**39.** Mischung nach Anspruch 38, bei welcher der verstärkende Füllstoff in einer Menge zwischen 40 und 90 phr vorhanden ist.

**40.** Mischung nach den Ansprüchen 37 bis 39, bei welcher die epoxidierte flüssige organische Verbindung ein Epoxid-Äquivalentgewicht zwischen 40 und 2000 hat.

**41.** Mischung nach Anspruch 40, bei welcher die epoxidierte flüssige organische Verbindung ein Epoxid-Äquivalentgewicht zwischen 50 und 1500 hat.

**42.** Mischung nach Anspruch 41, bei welcher die epoxidierte flüssige organische Verbindung ein Epoxid-Äquivalentgewicht zwischen 100 und 1000 hat.

**43.** Mischung nach einem der Ansprüche 37 bis 42, bei welcher die epoxidierte flüssige organische Verbindung ein epoxidiertes Öl aufweist.

**44.** Mischung nach Anspruch 43, bei welcher das epoxidierte Öl eine Erstarrungstemperatur hat, die niedriger als 23°C ist.

**45.** Mischung nach einem der Ansprüche 37 bis 44, bei welcher die epoxidierte flüssige organische Verbindung ein epoxidiertes Dienoligomer aufweist.

**46.** Mischung nach Anspruch 45, bei welcher das epoxidierte Dienoligomer ein mittleres Molekulargewicht zwischen 500 und 10.000 hat.

**47.** Mischung nach Anspruch 46, bei welcher das epoxidierte Dienoligomer ein mittleres Molekulargewicht zwischen 1.000 und 8.000 hat.

**48.** Mischung nach den Ansprüchen 37 bis 47, bei welcher das epoxidierte Dienoligomer ein epoxidiertes Oligomer von 1,3-Butadien oder Isopren oder Mischungen davon ist.

**49.** Mischung nach einem der Ansprüche 37 bis 48, bei welcher das Carboxylgruppen enthaltende elastomere Polymer ein Homopolymer oder Copolymer ist, das wenigstens 0,1 Mol% Carboxylgruppen bezogen auf die Gesamtzahl von Molen von in dem Polymer vorhandenen Monomeren enthält.

**50.** Mischung nach Anspruch 49, bei welcher das carboxylierte elastomere Polymer 1 bis 30 Mol% Carboxylgruppen enthält.

**51.** Mischung nach einem der Ansprüche 37 bis 50, bei welcher das carboxylierte elastomere Polymer ein mittleres Molekulargewicht zwischen 50,000 und 500,000 hat.

**52.** Mischung nach einem der Ansprüche 37 bis 51, bei welcher das carboxylierte elastomere Polymer durch (Co-) Polymerisation von einem oder mehreren konjugierten Dienmonomeren, optional in Mischung mit Monovinylarenen und/oder polaren Comonomeren, und darauffolgende Carboxylierung erhalten wird.

**53.** Mischung nach einem der Ansprüche 37 bis 51, bei welcher das carboxylierte elastomere Polymer durch Copolymerisation zwischen einem konjugierten Dien, optional in Mischung mit Monovinylarenen und/oder polaren Comonomeren, und einem olefinischen Monomer erhalten wird, das ein oder mehrere Carboxylgruppen oder ein Derivat davon enthält.

**54.** Mischung nach einem der Ansprüche 37 bis 51, bei welcher das carboxylierte elastomere Polymer durch Copolymerisation von einem oder mehreren Monoolefinen mit einem olefinischen Comonomer erhalten wird, das ein oder mehrere Carboxylgruppen oder Derivate davon enthält.

**55.** Mischung nach einem der Ansprüche 37 bis 54, bei welcher die epoxidierte flüssige Verbindung in einer Menge zwischen 5 und 200 Gewichtsteilen pro 100 Gewichtsteilen elastomerem Polymer vorhanden ist.

**56.** Mischung nach Anspruch 55, bei welcher die epoxidierte flüssige Verbindung in einer Menge zwischen 10 und 120 Gewichtsteilen pro 100 Gewichtsteilen elastomerem Polymer vorhanden ist.

**57.** Mischung nach einem der Ansprüche 37 bis 56, welche auch eine wirksame Menge eines Kondensationskatalysators aufweist.

**58.** Vernetztes elastomeres Produkt erhalten durch Vernetzen einer Mischung nach einem der Ansprüche 37 bis 57.

**Revendications**

**1.** Procédé de production de pneumatiques de roues de véhicules, lequel procédé comporte les étapes suivantes :

- fabriquer un pneumatique cru comprenant au moins un matériau élastomère réticulable ;
- soumettre ce pneumatique cru à un moulage dans une cavité de moule définie dans un moule à vulcanisation ;
- et faire réticuler le matériau élastomère en chauffant ce pneumatique à une température prédéterminée et pendant un laps de temps prédéterminé ;

**caractérisé en ce que** le matériau élastomère réticulable comprend :

a) un polymère élastomère comportant des groupes carboxyliques, qui présente une masse molaire moyenne de 2 000 à 1 000 000 ;
b) et un composé organique liquide époxydé, comportant au moins deux groupes époxy internes, où chaque groupe époxy comporte un pont oxirane qui relie :

i) deux atomes de carbone adjacents situés dans la chaîne principale, sous réserve que ni l'un ni l'autre de ces deux atomes de carbone adjacents ne soit un atome de carbone terminal de cette chaîne,

ii) ou deux atomes de carbone adjacents situés dans une chaîne latérale;

ladite étape de réticulation étant réalisée pratiquement sans ajout d'agents de réticulation.

2. Procédé conforme à la revendication 1, dans lequel on réalise l'étape de réticulation en chauffant le matériau élastomère réticulable à une température d'au moins 120 °C pendant un laps de temps d'au moins 3 minutes.

3. Procédé conforme à la revendication 2, dans lequel on réalise l'étape de réticulation en chauffant le matériau élastomère réticulable à une température d'au moins 160 °C pendant un laps de temps d'au moins 10 minutes.

4. Procédé conforme à l'une des revendications précédentes, dans lequel le matériau élastomère comprend en outre une charge renforçante.

5. Procédé conforme à la revendication 4, dans lequel la charge renforçante se trouve présente en une proportion de 20 à 120 pcpr.

6. Procédé conforme à la revendication 5, dans lequel la charge renforçante se trouve présente en une proportion de 40 à 90 pcpr.

7. Procédé conforme à l'une des revendications précédentes, dans lequel le composé organique liquide époxydé présente un poids d'équivalent époxyde de 40 à 2 000.

8. Procédé conforme à la revendication 7, dans lequel le composé organique liquide époxydé présente un poids d'équivalent époxyde de 50 à 1 500.

9. Procédé conforme à la revendication 8, dans lequel le composé organique liquide époxydé présente un poids d'équivalent époxyde de 100 à 1 000.

10. Procédé conforme à l'une des revendications précédentes, dans lequel le composé organique liquide époxydé comprend une huile époxydée.

11. Procédé conforme à la revendication 10, dans lequel l'huilé époxydée présente une température de congélation inférieure à 23 °C.

12. Procédé conforme à l'une des revendications précédentes, dans lequel le composé organique liquide époxydé comprend un oligomère de diène époxydé.

13. Procédé conforme à la revendication 12, dans lequel l'oligomère de diène époxydé présente une masse molaire moyenne de 500 à 10 000.

14. Procédé conforme à la revendication 13, dans lequel l'oligomère de diène époxydé présente une masse molaire moyenne de 1 000 à 8 000.

15. Procédé conforme à l'une des revendications 12 à 14, dans lequel l'oligomère de diène époxydé est un oligomère époxydé de 1,3-butadiène ou d'isoprène, ou un mélange de tels oligomères.

16. Procédé conforme à l'une des revendications précédentes, dans lequel le polymère élastomère comportant des groupes carboxyliques est un homopolymère ou copolymère contenant au moins 0,1 % en moles de groupes carboxyliques, par rapport au nombre total de moles des monomères présents dans le polymère.

17. Procédé conforme à la revendication 16, dans lequel le polymère élastomère carboxylé contient 1 à 30 % en moles de groupes carboxyliques.

18. Procédé conforme à l'une des revendications précédentes, dans lequel le polymère élastomère carboxylé présente une masse molaire moyenne de 50 000 à 500 000.

19. Procédé conforme à l'une des revendications précédentes, pour lequel le polymère élastomère carboxylé a été obtenu par polymérisation ou copolymérisation d'un ou de plusieurs monomères de type diène conjugué, éventuellement mêlé(s) à des monovinyl-arènes et/ou à des comonomères polaires, et carboxylation ultérieure.

20. Procédé conforme à l'une des revendications 1 à 18, pour lequel le polymère élastomère carboxylé a été obtenu par copolymérisation d'un diène conjugué, éventuellement mêlé à des monovinyl-arènes et/ou à des comonomères polaires, et d'un monomère oléfinique comportant un ou plusieurs groupes carboxyle ou dérivés de groupes carboxyle. '

21. Procédé conforme à l'une des revendications 1 à 18, pour lequel le polymère élastomère carboxylé a été obtenu par copolymérisation d'une ou plusieurs monoléfines et d'un comonomère oléfinique comportant un ou plusieurs groupes carboxyle ou dérivés de groupes carboxyle.

22. Procédé conforme à l'une des revendications précédentes, dans lequel le composé liquide époxydé se trouve présent en une proportion de 5 à 200 parties en poids pour 100 parties en poids de polymère élastomère.

23. Procédé conforme à la revendication 22, dans lequel le composé liquide époxydé se trouve présent en une proportion de 10 à 120 parties en poids pour 100 parties en poids de polymère élastomère.

24. Procédé conforme à l'une des revendications précédentes, dans lequel le matériau élastomère réticulable contient un catalyseur de condensation, en quantité efficace.

25. Pneumatique pour roues de véhicules, comprenant un ou plusieurs composants faits d'un matériau élastomère réticulé, **caractérisé en ce qu'**au moins l'un de ces composants comprend, en tant que matériau élastomère réticulé, un polymère élastomère comportant des groupes carboxyliques, qui présente une masse molaire moyenne de 2 000 à 1 000 000 et qui a été réticulé par réaction avec un composé organique liquide époxydé, comportant au moins deux groupes époxy internes, où chaque groupe époxy comporte un pont oxirane qui relie :

   i) deux atomes de carbone adjacents situés dans la chaîne principale, sous réserve que ni l'un ni l'autre de ces deux atomes de carbone adjacents ne soit un atome de carbone terminal de cette chaîne,
   ii) ou deux atomes de carbone adjacents situés dans une chaîne latérale,

ledit polymère élastomère carboxylé ayant été réticulé pratiquement sans ajout d'agents de réticulation.

26. Pneumatique conforme à la revendication 25, dans lequel le matériau élastomère réticulé comprend en outre une charge renforçante.

27. Pneumatique conforme à la revendication 26, dans lequel la charge renforçante se trouve présente en une proportion de 20 à 120 pcpr.

28. Pneumatique conforme à la revendication 27, dans lequel la charge renforçante se trouve présente en une proportion de 40 à 90 pcpr.

29. Pneumatique conforme à l'une des revendications 25 à 28, dans lequel le composé organique liquide époxydé est du type défini dans l'une des revendications 7 à 15.

30. Pneumatique conforme à l'une des revendications 25 à 29, dans lequel le polymère élastomère comportant des groupes carboxyliques est du type défini dans l'une des revendications 16 à 21.

31. Pneumatique pour roues de véhicules, comprenant une structure de ceinture s'étendant coaxialement autour d'une structure de carcasse et une bande de roulement qui s'étend coaxialement autour de la structure de ceinture et qui comporte une surface externe de roulement conçue pour être en contact avec le sol, **caractérisé en ce que** ladite bande de roulement comprend un polymère élastomère comportant des groupes carboxyliques, qui présente une masse molaire moyenne de 2 000 à 1 000 000 et qui a été réticulé par réaction avec un composé organique liquide époxydé, comportant au moins deux groupes époxy internes, où chaque groupe époxy comporte un pont oxirane qui relie :

   i) deux atomes de carbone adjacents situés dans la chaîne principale, sous réserve que ni l'un ni l'autre de ces deux atomes de carbone adjacents ne soit un atome de carbone terminal de cette chaîne,
   ii) ou deux atomes de carbone adjacents situés dans une chaîne latérale,

# EP 1 208 153 B1

ledit polymère élastomère carboxylé ayant été réticulé pratiquement sans ajout d'agents de réticulation.

32. Pneumatique conforme à la revendication 31, dans lequel la bande de roulement comprend en outre une charge renforçante.

33. Pneumatique conforme à la revendication 32, dans lequel la charge renforçante se trouve présente en une proportion de 20 à 120 pcpr.

34. Pneumatique conforme à la revendication 33, dans lequel la charge renforçante se trouve présente en une proportion de 40 à 90 pcpr.

35. Pneumatique conforme à l'une des revendications 31 à 34, dans lequel le composé organique liquide époxydé est du type défini dans l'une des revendications 7 à 15.

36. Pneumatique conforme à l'une des revendications 31 à 35, dans lequel le polymère élastomère comportant des groupes carboxyliques est du type défini dans l'une des revendications 16 à 21.

37. Composition élastomère réticulée, essentiellement constituée :

a) d'un polymère élastomère comportant des groupes carboxyliques, qui présente une masse molaire moyenne de 2 000 à 1 000 000 ;
b) d'un composé organique liquide époxydé, comportant au moins deux groupes époxy internes, où chaque groupe époxy comporte un pont oxirane qui relie :

i) deux atomes de carbone adjacents situés dans la chaîne principale, sous réserve que ni l'un ni l'autre de ces deux atomes de carbone adjacents ne soit un atome de carbone terminal de cette chaîne,
ii) ou deux atomes de carbone adjacents situés dans une chaîne latérale ;

c) et d'au moins un ingrédient supplémentaire, choisi dans l'ensemble formé par les charges renforçantes, antioxydants, agents protecteurs, plastifiants, agents de compatibilisation pour charges renforçantes, adhésifs, antiozonants, résines modifiantes, fibres, lubrifiants et catalyseurs de condensation ;

ladite composition ayant été réticulée pratiquement sans ajout d'agents de réticulation.

38. Composition conforme à la revendication 37, dans laquelle une charge renforçante se trouve présente en une proportion de 20 à 120 pcpr.

39. Composition conforme à la revendication 38, dans laquelle la charge renforçante se trouve présente en une proportion de 40 à 90 pcpr.

40. Composition conforme à l'une des revendications 37 à 39, dans laquelle le composé organique liquide époxydé présente un poids d'équivalent époxyde de 40 à 2 000.

41. Composition conforme à la revendication 40, dans laquelle le composé organique liquide époxydé présente un poids d'équivalent époxyde de 50 à 1 500.

42. Composition conforme à la revendication 41, dans laquelle le composé organique liquide époxydé présente un poids d'équivalent époxyde de 100 à 1 000.

43. Composition conforme à l'une des revendications 37 à 42, dans laquelle le composé organique liquide époxydé comprend une huile époxydée.

44. Composition conforme à la revendication 43, dans laquelle l'huile époxydée présente une température de congélation inférieure à 23 °C.

45. Composition conforme à l'une des revendications 37 à 44, dans laquelle le composé organique liquide époxydé comprend un oligomère de diène époxydé.

**46.** Composition conforme à la revendication 45, dans laquelle l'oligomère de diène époxydé présente une masse molaire moyenne de 500 à 10 000.

**47.** Composition conforme à la revendication 46, dans laquelle l'oligomère de diène époxydé présente une masse molaire moyenne de 1 000 à 8 000.

**48.** Composition conforme à l'une des revendications 45 à 47, dans laquelle l'oligomère de diène époxydé est un oligomère époxydé de 1,3-butadiène ou d'isoprène, ou un mélange de tels oligomères.

**49.** Composition conforme à l'une des revendications 37 à 48, dans laquelle le polymère élastomère comportant des groupes carboxyliques est un homopolymère ou copolymère contenant au moins 0,1 % en moles de groupes carboxyliques, par rapport au nombre total de moles des monomères présents dans le polymère.

**50.** Composition conforme à la revendication 49, dans laquelle le polymère élastomère carboxylé contient 1 à 30 % en moles de groupes carboxyliques.

**51.** Composition conforme à l'une des revendications 37 à 50, dans laquelle le polymère élastomère carboxylé présente une masse molaire moyenne de 50 000 à 500 000.

**52.** Composition conforme à l'une des revendications 37 à 51, pour laquelle le polymère élastomère carboxylé a été obtenu par polymérisation ou copolymérisation d'un ou de plusieurs monomères de type diène conjugué, éventuellement mêlé(s) à des monovinyl-arènes et/ou à des comonomères polaires, et carboxylation ultérieure.

**53.** Composition conforme à l'une des revendications 37 à 51, pour laquelle le polymère élastomère carboxylé a été obtenu par copolymérisation d'un diène conjugué, éventuellement mêlé à des monovinyl-arènes et/ou à des comonomères polaires, et d'un monomère oléfinique comportant un ou plusieurs groupes carboxyle ou dérivés de groupes carboxyle.

**54.** Composition conforme à l'une des revendications 37 à 51, pour laquelle le polymère élastomère carboxylé a été obtenu par copolymérisation d'une ou plusieurs monoléfines et d'un comonomère oléfinique comportant un ou plusieurs groupes carboxyle ou dérivés de groupes carboxyle.

**55.** Composition conforme à l'une des revendications 37 à 54, dans laquelle le composé liquide époxydé se trouve présent en une proportion de 5 à 200 parties en poids pour 100 parties en poids de polymère élastomère.

**56.** Composition conforme à la revendication 55, dans laquelle le composé liquide époxydé se trouve présent en une proportion de 10 à 120 parties en poids pour 100 parties en poids de polymère élastomère.

**57.** Composition conforme à l'une des revendications 37 à 56, qui contient en outre un catalyseur de condensation, en quantité efficace.

**58.** Produit élastomère réticulé, obtenu par réticulation d'une composition conforme à l'une des revendications 37 à 57.

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2724707 A
- IT 1295551
- US 5173557 A
- US 4341672 A
- US 4851556 A
- US 5366846 A
- US 2729707 A
- US 3896365 A
- EP 199064 A
- US 4872822 A
- US 4768937 A
- EP 242840 A
- EP 501227 A

**Non-patent literature cited in the description**

- **S.K. CHAKRABORTY ; S.K. DE.** *Journal of Applied Polymer Science,* 1982, vol. 27, 4561-4576
- **R. ALEX ; P.P. DE ; N.M. MATHEW ; S.K. DE.** *Plastics and Rubber Processing and Applications,* 1990, vol. 14 (4
- **H.P. BROWN.** *Rubber Chemistry and Technology,* 1957, vol. XXX (5), 1347